# EUROPÄISCHE PATENTSCHRIFT

(11) **EP 3 176 462 B1**
(45) Veröffentlichungstag und Bekanntmachung des Hinweises auf die Patenterteilung: **20.02.2019**
(21) Anmeldenummer: 16184242.2
(22) Anmeldetag: 16.08.2016
(51) Int. Cl.: F16F 9/04

(54) **BALGLUFTFEDER MIT VERSENKTEN WULSTRINGSCHRAUBEN**
AIR SPRING BELLOWS WITH RECESSED BEAD RING SCREWS
SOUFFLET PNEUMATIQUE DOTE DE VIS A SERTIR NOYEES

(30) Priorität: 30.11.2015 DE 202015008448 U
(43) Veröffentlichungstag der Anmeldung: 07.06.2017
(73) Patentinhaber: ContiTech Luftfedersysteme GmbH, 30165 Hannover (DE)
(72) Erfinder: Mosich, Manuel, 31157 Sarstedt (DE)
(74) Vertreter: Kilsch, Armin Ralph

(56) Entgegenhaltungen:
- EP-A1- 2 531 745
- WO-A1-2015/139854
- US-A1- 2015 167 772

## Beschreibung

Die Neuerung betrifft eine Balgluftfeder, insbesondere für industrielle Anwendungen wie etwa für eine luftgefederte Maschinenlagerung, wobei die Balgluftfeder über Anschlussteile zwischen gefederter und ungefederter Masse befestigt ist, der Balg zwischen den Anschlussteilen ballonartig nach außen hervortritt und an beiden Enden wulstartige ggf. mit Kernringen verstärkte Verdickungen, nämlich Balgwülste aufweist, wobei die Balgwülste durch Wulstringe, welche die Balgwülste über deren Umfang umgreifen, an den jeweiligen endseitigen Anschlussteilen mit Hilfe von mehreren über den Umfang verteilten Schrauben festgeklemmt bzw. eingespannt sind.

Solche Balgluftfedern, ausgebildet als Einfaltenbälge oder als Mehrfaltenbälge, dienen üblicherweise zur Federung von Maschinenrahmen auf Fundamenten, aber auch zur Federung von zum Beispiel Wagenkästen auf Fahrwerken, aber auch als aktive Hubzylinder für das Anheben von Lasten etc.

Bei industrieller Anwendung, also etwa bei der Federung von Maschinen, weisen die zugehörigen Luftfederbälge üblicherweise einen mit einem metallischen Kernring verstärkten Rand auf, der mit einem metallischen Wulstring an dem jeweiligen Anschlussteil, d.h. am Luftfederdeckel bzw. an der Luftfederfelge festgeklemmt wird. Der Wulstring wird dabei dadurch festgeklemmt, dass über den Umfang des Wulstrings Schrauben angreifen oder auch Gewindebolzen/Stehbolzen befestigt sind, die durch eine Bohrung des Anschlussteils gesteckt werden und außenseitig verschraubt und gegebenenfalls gekontert werden. Damit wird eine luftdichte Verbindung zwischen Luftfederbalg und Anschlussteil hergestellt.

Die US 2015/0167772 A1 offenbart ein Gasfederungssystem mit einem Anschluss-oder Halteelement, bei dem das Halteelement eine zum Luftfederbalg weisende Oberfläche und eine davon abgewandte Oberfläche aufweist, wobei das Halteelement mit Schrauben an den weiteren Anschlussteilen befestigt ist und die flexible Wand des Luftfederbalgs einspannt. Hierzu sind, siehe z.B. dortige Fig. 6 sowie [0054], entsprechende mit Bohrungen und Vertiefungen versehene Anschlussteile erforderlich.

Die WO2015/139854 A1 offenbart eine kältefeste Luftfedereinrichtung, bei der im Bereich der Einspannung zwischen Deckel und Wulstring bzw. Luftfederbalg und oder Klemmring ein weiterer Dichtring ausgebildet ist, wodurch auch bei größerer Kälte eine entsprechende elastische Dichtung möglich wird. Eine besondere Ausbildung von Befestigungselementen ist nicht offenbart.

Die EP 2 531 745 A0 offenbart eine Luftfeder Einrichtung für ein Schienenfahrzeug, bei der der Wulstring des Luftfederbalgs mit 2 Kernringen versehen ist, die durch die im Luftfederbalg befindlichen Festigkeitsträger s-förmig umschlungen werden. Auch hier ist keine besonders ausgebildete Befestigungseinrichtung des Luftfederbalgs mit beispielsweise der zugehörigen Oberplatte offenbart.

Eine Luftfeder kann jeweils eine maximale und eine minimale Höhe einnehmen, nämlich abhängig von der Einfederung bzw. von der Ruhelage oder Einbaulage. Die minimale Höhe wird unter anderem von der Ausführung der Metallteile beeinflusst, wie etwa Anschlussteile, Schrauben und Wulstring. Durch eine möglichst flache Ausführung all dieser Metallteile und insbesondere der Wulstringe kann eine möglichst geringe Minimalhöhe erreicht werden. Dies ist gerade bei Anwendungen mit limitierten Bauräumen erforderlich.

In Bezug auf die Wulstringen und die dortigen Befestigungsarten oder Klemmungen unterscheiden sich die bisherigen Ausführungen. So gibt es Wulstringe mit direkt im Wulstring eingebrachten Innengewinden, Wulstringe mit aufgeschweißten Gewindebolzen, mit durchgesteckten Schrauben oder mit durchgesteckten und verschweißten Schrauben.

Bei der letztgenannten Art, bei der die Schraube durch eine Schweißnaht am Schraubenkopf gegen Verdrehung und gegen axiales Verschieben gesichert wird, ergibt sich zum Beispiel der Nachteil, dass der Werkstoff der zu verschweißenden Schraube eine normiert nachgewiesene Schweißeignung besitzen muss. Dies ist bei den für solche Anwendungen üblichen Werkstoffen von höherfesten Schrauben, nämlich Schrauben der Festigkeitsklasse 8.8 oder höher nicht gegeben. Somit besteht ein Problem darin, dass alle Einrichtungen des Bauteils einerseits Schweißgeeignet sein müssen, andererseits Schrauben mit bestimmten höheren Festigkeitsklassen besser und in passenderen Dimensionen eingesetzt werden sollen.

Bei den einfachen durchgesteckten Schrauben sind häufig teure Spezialschrauben erforderlich. Bei den aufgeschweißten Gewindebolzen kann es passieren, dass durch hohe Anzugsmomente die Gewindebolzen geschädigt werden können oder abreißen.

Für die Erfindung bestand daher die Aufgabe, eine Verbindung zwischen Balgluftfeder und Anschlussteil mit einem Wulstring bereit zu stellen, die einerseits in Bezug auf Verdrehung und axialer Fixierung des am Anschlussteil einzuspannenden Balgs gleiche Sicherheiten wie bei bekannten Schraubverbindungen aufweist, die die Bauhöhe bzw. den Montageraum für eine solche Balgluftfeder minimiert und die andererseits aus preiswerten Normteilen einfach und sicher unter Erfüllung aller Normen und Vorschriften hergestellt werden kann.

Gelöst wird diese Aufgabe durch die Merkmale des Hauptanspruchs. Weitere vorteilhafte Ausbildungen sind in den Unteransprüchen offenbart.

Dabei sind die Schrauben als Senkschrauben mit kopfseitigem Mehrkantprofil versehen und das zugehörige Schraubenloch im Wulstring ist mit einer den Schraubenkopf korrespondierend aufnehmenden Vertiefung bzw. Versenkung so ausgebildet ist, dass der Schraubenkopf im Wesentlichen bündig mit der zur Innenseite des Balgs weisenden Oberfläche des Wulstringes ist. Durch eine solche Ausbildung erreicht man eine minimale Bauhöhe und durch die Versenkung bzw. Vertiefung gleichzeitig eine ausreichende Sicherung gegen Verdrehen des Gewindes bzw. der Schraube. Damit kann z. B. auf ein Verschweißen völlig verzichtet werden.

Anhand eines Ausführungsbeispiels im Sinne einer vorteilhaften Weiterbildung, nämlich anhand einer Balgluftfeder, bei der die Schrauben als Senkschrauben mit Vierkanteinsatz ausgebildet sind und das zugehörige Vierkantloch im Wulstring mit einer den Schraubenkopf aufnehmenden Vertiefung ausgebildet ist, soll die Neuerung näher erläutert werden. Es zeigen
- Fig. 1: Eine Wulstring einer neuerungsgemäßen Balgluftfeder mit den zugehörigen Schrauben,
- Fig. 2: eine Normschraube, wie sie in der Darstellung der Fig. 1 verwendet wird,
- Fig. 3: einen Wulstring herkömmlicher Art mit Schlossschrauben mit halbrunden Kopf,
- Fig. 4: weitere herkömmliche Formen von Wulstringen,
- Fig. 5: die Balgluftfeder im Zusammenbau in der Ansicht und im Schnitt.

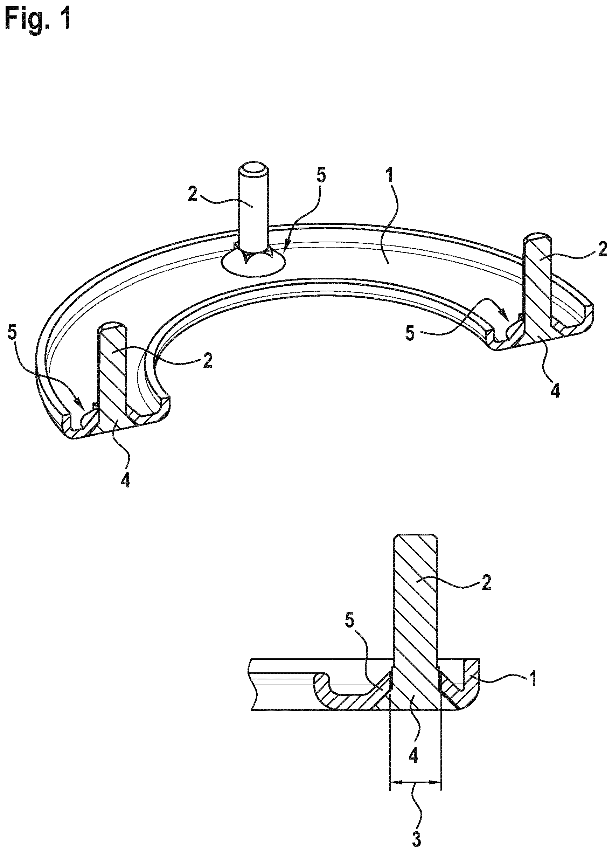

Die Fig. 1 zeigt im oberen Teil einen Wulstring 1 einer neuerungsgemäßen Balgluftfeder, bei dem über den Umfang vier Schrauben 2 verteilt sind, mit deren Hilfe der Balgwulst an das hier nicht dargestellte Anschlussteil geklemmt wird. Im unteren Teil zeigt die Fig. 1 einen Querschnitt durch den Wulstring 1 und die Schraube 2 im Bereich des zugehörigen Schraubenlochs 3.

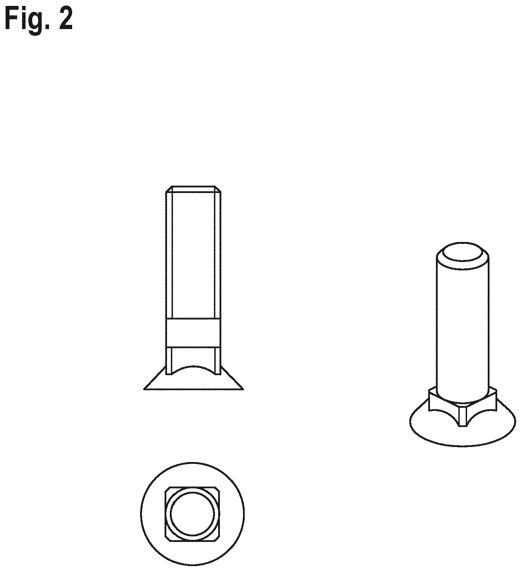

Die Schrauben 2 sind als Senkschrauben mit Vierkanteinsatz ausgebildet, hier als Normschraube nach DIN 608, wie in Fig. 2 dargestellt. Das zugehörige als Vierkantloch ausgebildete Schraubenloch 3 im Wulstring ist mit einer den Schraubenkopf 4 aufnehmenden Vertiefung 5 ausgebildet.

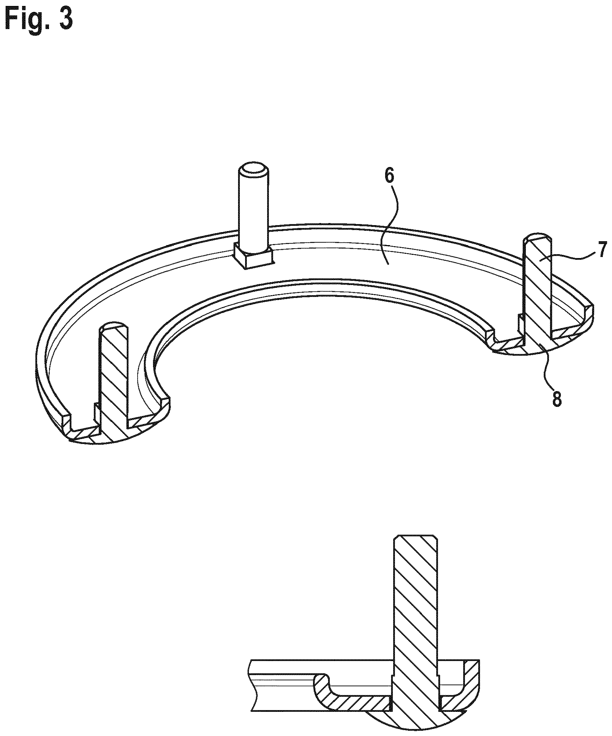

Fig. 3 zeigt im oberen Teil einen Wulstring 6 herkömmlicher Art, bei der die Schrauben 7 als Schlossschrauben mit halbrunden Kopf 8 ausgebildet sind, hier einmal in dreidimensionaler Darstellung und einmal als Schnittzeichnung.

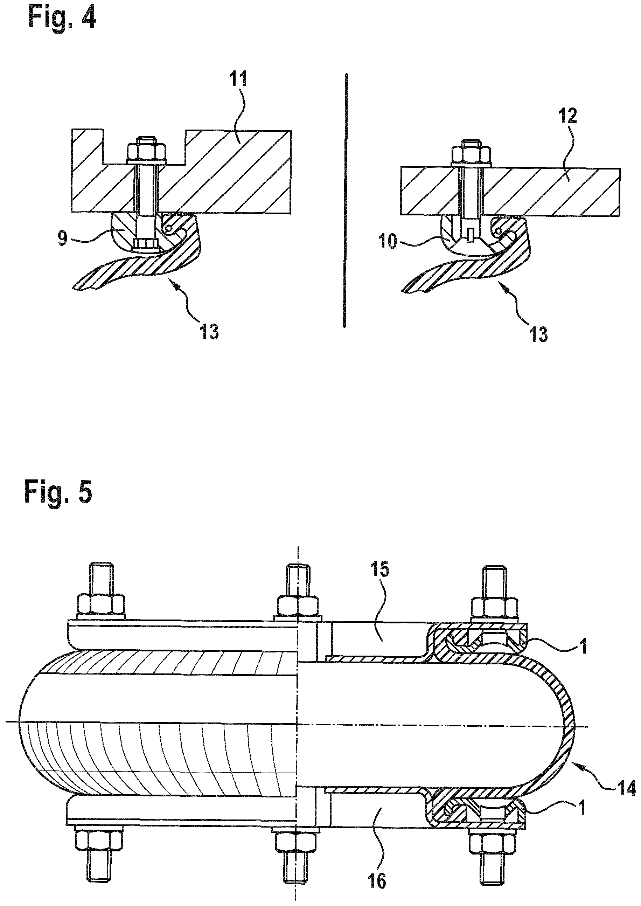

Fig. 4 zeigt weitere Formen von Wulstringen 9 und 10 in herkömmlicher Art, mit denen die dortigen Bälge 13 über ihre Balgwülste an die Anschlussteile 11 und 12 geklemmt werden. Bei den hier genutzten Schrauben handelt es sich um Spezialschrauben, im Gegensatz zu den in der Fig. 1 gezeigten Normschrauben.

Fig. 5 zeigt eine zur Verdeutlichung eine Balgluftfeder in zusammengebauter Form, auf der linken Seite in der Ansicht und auf der rechten Seite im Schnitt. Man erkennt hier deutlich, wie der Balg 14 mithilfe der Wulstringe 1 an die Anschlussteile 15 und 16 angeklemmt ist.

### Bezugszeichenliste

### (Teil der Beschreibung)

- 1: Wulstring
- 2: Schraube
- 3: Schraubenloch
- 4: Schraubenkopf
- 5: Vertiefung/Versenkung
- 6: Wulstring (Stand der Technik)
- 7: Schraube (Stand der Technik)
- 8: Kopf (Stand der Technik)
- 9: Wulstring (Stand der Technik)
- 10: Wulstring (Stand der Technik)
- 11: Anschlussteil (Stand der Technik)
- 12: Anschlussteil (Stand der Technik)
- 13: Balg
- 14: Balg
- 15: Anschlussteil
- 16: Anschlussteil

## Patentansprüche

1. Balgluftfeder, insbesondere für industrielle Anwendungen wie etwa für eine luftgefederte Maschinenlagerung, wobei die Balgluftfeder über Anschlussteile zwischen gefederter und ungefederter Masse befestigt ist, der Balg zwischen den Anschlussteilen ballonartig nach außen hervortritt und an beiden Enden wulstartige ggf. mit Kernringen verstärkte Verdickungen, nämlich Balgwülste aufweist, wobei die Balgwülste durch Wulstringe, welche die Balgwülste über deren Umfang umgreifen, an den jeweiligen endseitigen Anschlussteilen mit Hilfe von mehreren über den Umfang verteilten Schrauben festgeklemmt bzw. eingespannt sind, **dadurch gekennzeichnet, dass** die Schrauben als Senkschrauben mit kopfseitigem Mehrkantprofil versehen sind und das zugehörige Schraubenloch im Wulstring mit einer den Schraubenkopf korrespondierend aufnehmenden Vertiefung bzw. Versenkung so ausgebildet ist, dass der Schraubenkopf im Wesentlichen bündig mit der zur Innenseite des Balgs weisenden Oberfläche des Wulstringes ist.

2. Balgluftfeder nach Anspruch 1, bei der die Schrauben als Senkschrauben mit Vierkanteinsatz ausgebildet sind und das zugehörige Vierkantloch im Wulstring mit einer den Schraubenkopf aufnehmenden Vertiefung ausgebildet ist.

## Claims

1. Bellows air spring, in particular for industrial applications, such as for instance for an air-sprung machine mounting, the bellows air spring being secured between a sprung mass and an unsprung mass by means of connection parts, the bellows protruding out between the connection parts like a balloon and having at both ends bead-like thickenings, possibly reinforced with core rings, to be specific bellows beads, the bellows beads being securely clamped or restrained by bead rings, which grip the bellows beads around their circumference, on the respective end connection parts with the aid of a number of screws distributed over the circumference, **characterized in that** the screws are formed as countersunk screws with a polygonal profile at the top and the associated screw hole in the bead ring is formed with a depression or recess that correspondingly receives the screw head in such a way that the screw head is substantially flush with the surface of the bead ring facing the inner side of the bellows.

2. Bellows air spring according to Claim 1, in which the screws are formed as countersunk screws with a rectangular insert and the associated rectangular hole in the bead ring is formed with a recess that receives the screw head.

## Revendications

1. Ressort pneumatique à soufflet, en particulier pour des applications industrielles, par exemple pour un support sur palier de machines à suspension pneumatique, le ressort pneumatique à soufflet étant fixé par le biais de pièces de raccordement entre une masse suspendue et une masse non suspendue, le soufflet faisant saillie vers l'extérieur en forme de ballon entre les parties de raccordement et présentant au niveau des deux extrémités des épaississements de type bourrelet éventuellement renforcés avec des bagues de noyau, à savoir des bourrelets de soufflet, les bourrelets de soufflet étant serrés fixement ou tendus fixement par des anneaux de bourrelet qui viennent en prise autour des bourrelets de soufflet sur leur périphérie, au niveau des parties de raccordement respectives du côté de l'extrémité, à l'aide de plusieurs vis réparties sur la périphérie, **caractérisé en ce que** les vis, en tant que vis à têtes fraisées, sont pourvues d'un profil polygonal du côté de la tête et le trou de vis associé dans la bague de bourrelet est réalisé avec un renfoncement ou un creux de réception correspondant à la tête de vis telle sorte que la tête de vis soit essentiellement en affleurement avec la surface de l'anneau de bourrelet tournée vers le côté intérieur du soufflet.

2. Ressort pneumatique à soufflet selon la revendication 1, dans lequel les vis sont réalisées sous forme de vis à tête fraisée avec un insert carré et le trou carré associé est réalisé dans la bague de bourrelet avec un renfoncement recevant la tête de vis.
